(19) Europäisches Patentamt
European Patent Office
Office européen des brevets

(11) Veröffentlichungsnummer: **0 274 665 B1**

(12) **EUROPÄISCHE PATENTSCHRIFT**

(45) Veröffentlichungstag der Patentschrift: **14.04.93**

(51) Int. Cl.5: **G11B 5/702**

(21) Anmeldenummer: **87118119.4**

(22) Anmeldetag: **08.12.87**

# (54) Verfahren zur Herstellung eines magnetischen Aufzeichnungsträgers.

(30) Priorität: **19.12.86 DE 3643458**

(43) Veröffentlichungstag der Anmeldung:
**20.07.88 Patentblatt 88/29**

(45) Bekanntmachung des Hinweises auf die Patenterteilung:
**14.04.93 Patentblatt 93/15**

(84) Benannte Vertragsstaaten:
**DE FR GB**

(56) Entgegenhaltungen:

**PATENT ABSTRACTS OF JAPAN, Band 9, Nr. 157 (P-369)[1880], 2. Juli 1985**

**PATENT ABSTRACTS OF JAPAN, Band 7, Nr. 69 (C-158) 23. März 1983, Seite 125 C 158**

**PATENT ABSTRACTS OF JAPAN, Band 7, Nr. 209 (C-186), Seite 127 C 186**

(73) Patentinhaber: **BASF Magnetics GmbH**
**Gottlieb-Daimler-Strasse 10**
**W-6800 Mannheim(DE)**

(72) Erfinder: **Gerum, Johannes, Dr.**
**Blumenstrasse 51**
**W-8034 Unterpfaffenhofen(DE)**
Erfinder: **Kober, Heinrich, Dr.**
**Georgenstrasse 12**
**W-8021 Hohenschäftlarn(DE)**
Erfinder: **Meckel, Walter, Dr.**
**Zonser Strasse 9**
**W-4040 Neuss-Uedesheim(DE)**

(74) Vertreter: **Münch, Volker et al**
**BASF Aktiengesellschaft Patentabteilung-C6 ZSP/A**
**W-6700 Ludwigshafen (DE)**

EP 0 274 665 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen magnetischen Aufzeichnungsträger, bestehend aus einem unmagnetischen Schichtträger und mindestens einer darauf befindlichen magnetisierbaren Schicht, die feinteilige magnetische Pigmente sowie als polymere Bindemittel durch Polyisocyanate vernetzte Oligo- und/oder Polyurethane und/oder Polyharnstoffe enthält.

Es ist bereits bekannt, daß magnetische Aufzeichnungsträger hoher Speicherdichte erst dann eine ausreichende Verschleißfestigkeit erhalten, wenn das eingesetzte Bindemittelsystem aus einem dreidimensional verknüpften Netzwerk aufgebaut ist. Um dies zu erreichen, werden unterschiedliche Wege vorgeschlagen.

So erhält man ein hochmolekulares, abriebfestes Melaminharz als Bindemittelmatrix durch Umsetzung von Hexamethylolmelamin mit Bindemitteln, welche entsprechende funktionelle Gruppen enthalten, in Gegenwart von Säuren als Katalysatoren. Als geeignete Bindemittel werden unter anderem Hydroxyalkylmethacrylate, Alkydharze, Epoxidharze, Polyvinylalkohol- oder Cellulosederivate genannt. Um jedoch eine ausreichende Reaktionsgeschwindigkeit zu erreichen, muß diese Vernetzungsreaktion mit starken Säuren katalysiert werden, was insbesondere bei Zusatz von Copolymeren auf Polyester/Polyurethanbasis zum Abbau des Polymeren und damit zu einer drastischen Verminderung der Bandstabilität führt. Weiter werden durch starke Säuren die insbesondere bei magnetischen Aufzeichnungsträgern hoher Speicherdichte eingesetzten Ton- und Videoköpfe beschädigt, was in kurzer Zeit zu einem deutlichen Pegelabfall führt.

Phenoxy- und Epoxyharze lassen sich in Gegenwart von Säuren oder Basen ebenfalls zu einem dreidimensionalen Netzwerk verknüpfen. Ähnlich wie beim Aufbau des hochmolekularen Melaminharzes wirken sich die erforderlichen Katalysatoren im Hinblick auf einen Bindemittelabbau oder Korrosion von Aufnahme- und Wiedergabeköpfen nachteilig aus.

Weitaus am häufigsten wird der Aufbau eines hochmolekularen Bindemittelnetzwerkes jedoch durch Zugabe von isocyanatgruppenhaltigen Verbindungen in die magnetische Dispersion angestrebt. Dabei ist mit einer Reihe von Nebenreaktionen zu rechnen, die in Konkurrenz zu der angestrebten Bindemittelverknüpfung stehen.

So werden insbesondere bei magnetischen Aufzeichnungsträgern hoher Speicherdichte magnetische Pigmente eingesetzt, deren Oberfläche mit niedermolekularen, reaktiven Verbindungen zur Verbesserung der Dispergierbarkeit belegt sind. In diesem Sinne werden Amine (JP 76/153839), Fettsäuren (JP 77/30649) oder Silikone (JP 76/126713) beschrieben. Durch partielle Desorption dieser Verbindungen von der Pigmentoberfläche entstehen jedoch niedermolekulare Verbindungen, die eine Destabilisierung der magnetisierbaren Schicht bewirken.

Als Gleitmittel werden magnetischen Dispersionen häufig Substanzen zugesetzt, die ebenfalls zu unerwünschten Nebenreaktionen mit der Isocyanatkomponente führen. Bei Zugabe von Fettsäuren (JP 73/82333), mono- oder difunktionellen Glycerinestern (IBM Techn. Discl. Bull. 23, 1981), langkettigen aliphatischen Alkoholen (JP 77/99171) langkettigen Alkylaminen (JP 79/65799) in die magnetische Dispersion werden die zugesetzten isocyanatgruppenhaltigen Verbindungen desaktiviert, wodurch ebenfalls niedermolekulare Verbindungen entstehen, die zu einer Erniedrigung der Schichtstabilität führen.

Die weitaus wichtigste Nebenreaktion mit der niedermolekularen Isocyanatkomponente läuft mit dem Wasser ab, das über das magnetische Pigment, das polymere Bindemittel oder das Lösungsmittel in die magnetische Dispersion eingeschleppt wird. Im Vergleich zu den übrigen Reaktionspartnern des Isocyanates liegt das Wasser im molekularen Überschuß vor, verfügt aufgrund der kleinen Molekülgröße über eine hohe Beweglichkeit und hat zudem eine hohe Reaktivität. Bei einem Überschuß von Wasser reagiert die Vernetzungskomponente zu einem Polyharnstoffgerüst ab, ohne das polymere Bindemittel miteinzubeziehen und verbessert dadurch zwar den Elastizitätsmodul der magnetisierbaren Schicht, ohne jedoch eine Verringerung der Abriebsneigung oder eine Verbesserung der Lösungsmittelfestigkeit zu bewirken. Außer durch möglichst starke Vernetzung läßt sich die Verschleißfestigkeit eines magnetischen Aufzeichnungsträgers auch durch das polymere Bindemittel selbst steuern. Dabei gilt, daß sich durch steigende Härte, einen hohen Dehnungsmodul und große Reißfestigkeit des Bindemittels die mechanischen Eigenschaften der resultierenden magnetisierbaren Schicht in die gewünschte Richtung verändern lassen. Dies erreicht man auf zweierlei Weise. Durch Abmischen eines harten Bindemittels, zum Beispiel ein Phenoxy-, ein Epoxyharz, ein verseiftes Copolymeres aus Vinylchlorid/Vinylacetat, Vinylidenchlorid oder Cellulosederivate, mit einer weichen Polyester-Polyurethan-Komponente lassen sich die gewünschten Eigenschaften zwar weitgehend anforderungsgemäß einstellen, in den allermeisten Fällen führt eine thermodynamische Unverträglichkeit der Komponente jedoch zu einer Entmischung des Bindemittelsystems. Dies äußert sich insbesondere langfristig in einem drastischen Abfall aller mechanischen Eigenschaften des magnetischen Aufzeichnungsträgers. Eine derartige Entmischung läßt sich vermeiden, wenn die geforderten mechanischen Eigenschaften durch ein einziges Polymer eingestellt werden können, oder die verschiedenen Polymeren durch eine, unter den Härtungsbedingungen sicher ablaufenden Vernetzungsreaktion unter Ausbildung eines interpenetrating Netzwerks an der Entmischung gehindert werden.

Der Erfindung liegt daher die Aufgabe zugrunde, Bindemittelsysteme für einen magnetischen Aufzeichnungsträger zu finden, die auch ohne mehrfunktionelle Polyisocyanate unter Vernetzung ein dreidimensionales Netzwerk ausbilden, ohne die bei der Melaminhärtung auftretenden Nachteile aufzuweisen.

Diese Aufgabe wurde erfindungsgemäß gelöst durch ein magnetisches Speichermedium, bestehend aus einem unmagnetischen Schichtträger und mindestens einer darauf befindlichen magnetisierbaren Schicht, enthaltend feinteilige magnetische Pigmente und als polymere Bindemittel durch Polyisocyanate vernetzte Oligo- und/oder Polyurethane und/oder Polyharnstoffe, dadurch gekennzeichnet, daß der Aufbau der vernetzten Bindemittel durch im wesentlichen difunktionelle Polyisocyanate geschieht, von denen 1 bis 100 Mol.% einen 1,3,5-Oxadiazin-2,4,6-trionring enthalten, wobei die Vernetzungsreaktion in Gegenwart von Hydroxyl- und/oder aliphatischen Aminogruppen geschieht.

Zum Aufbau der erfindungsnotwendigen Oxadiazintrionring enthaltenden Oligo- und/oder Polyurethane und/oder Polyharnstoffe werden höhermolekulare und/oder niedermolekulare Hydroxyl- und/oder Aminoverbindungen mit im wesentlichen difunktionellen Polyisocyanaten zur Reaktion gebracht. Beispiele für Diisocyanate sind aliphatische, cycloaliphatische, araliphatische oder aromatische Polyisocyanate mit einer NCO-Funktionalität von vorzugsweise 2, wie sie bei W. Siefken, Liebigs Annalen 562, 75 (1948) beschrieben werden und wie sie vorzugsweise als Diisocyanatkomponenten in der DE-OS 29 20 501 aufgeführt sind. Bevorzugte Polyisocyanate sind Diphenylmethan-4,4'-, 4,2'- und/oder 2,2'-diisocyanat, Toluylen-2,4- und/oder -2,6-diisocyanat, Paraphenylendiisocyanat, 3,3'-Dimethyl-diphenyl-4,4'-diisocyanat, Mono-, bis-tetra-$C_1$-$C_4$-alkylsubstituierte Diphenylmethan-4,4'-diisocyanate sowie aliphatische oder cycloaliphatische Diisocyanate wie Hexamethylendiisocyanat, Trimethylhexamethylendiisocyanat, Lysinmethylesterdiisocyanat, Dicyclohexylmethan-4,4'-, -2,4'- und/oder -2,2'-diisocyanat, die Hexahydrotoluylendiisocyanate, Dodecylbenzol-2,4-diisocyanat sowie das Isophorondiisocyanat.

Gegebenenfalls können kleine Anteile, bis 5 Mol.-% an höherfunktionellen Isocyanaten mitverwendet werden, wie zum Beispiel Benzol-1,3,5-triisocyanat, Polyphenyl-polymethylen-polyisocyanate, wie sie zum Beispiel in den GB-PS 874 430 und 848 671 beschrieben werden, Biuretgruppen aufweisende Polyisocyanate, Isocyanuratgruppen aufweisende Polyisocyanate oder durch Umsetzung von tri- oder höherfunktionellen niedermolekularen Polyolen mit überschüssigen Mengen an Diisocyanaten hergestellte höherfunktionelle Polyisocyanate.

Erfindungswesentlich ist jedoch, daß 1 bis 100 Mol.-%, vorzugsweise 5 bis 100 Mol.-% der verwendeten Polyisocyanate einen 1,3,5-Oxadiazin-2,4,6-trionring enthalten. Solche Polyisocyanate sind ausführlich in der US-Patentschrift 3 748 329 beschrieben und lassen sich durch Kohlendioxideinwirkung auf Polyisocyanate unter beispielsweise Tributylphosphinkatalyse erhalten. Sie stellen stabile, den gängigen Polyurethanreaktionen zugängliche Polyisocyanate dar, ohne dabei den Oxadiazintrionring zu verlieren. Eine besonders bevorzugte Komponente ist das durch Kohlendioxid einwirkung auf Hexamethylendiisocyanat unter Tributylphosphinkatalyse erhaltene Diisocyanat der Formel

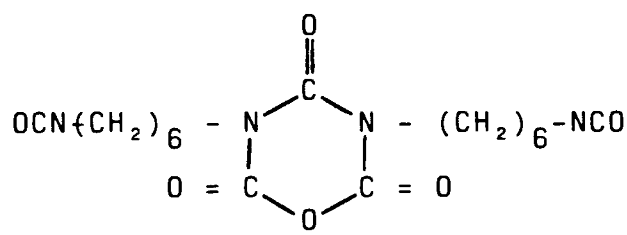

Als höhermolekulare, im wesentlichen difunktionelle Polyhydroxylverbindungen mit Molekulargewichten von 400 bis 6000, können alle höhermolekularen Polyhydroxylverbindungen eingesetzt werden, wie sie üblicherweise bei der Polyurethanherstellung verwendet werden. Typische Vertreter werden beispielsweise in der DE-OS 29 20 501 aufgeführt und sind beispielsweise höhermolekulare Polyester, Polyesteramide, Polyether, Polyacetale und Polycarbonate, vorzugsweise mit Molekulargewichten von 800 bis 3000 und Verbindungen mit etwa zwei Hydroxylgruppen pro höhermolekularer Polyhydroxylverbindung der genannten Molekulargewichtsbereiche. Die für das Verfahren geeigneten, Hydroxylgruppen enthaltenden Polyester sind beispielsweise Umsetzungsprodukte von mehrwertigen, vorzugsweise zweiwertigen Alkoholen mit mehrwertigen, vorzugsweise zweiwertigen Carbonsäuren, Carbonsäureestern und/oder Carbonsäureanhydriden. Gleichfalls verwendet werden können Hydroxycarbonsäuren oder Lactone wie zum Beispiel Caprolacton. Verwendbare Polyester werden beispielsweise auch in Houben-Weyl, Band XIV/2, Seite 12 bis 29, Thieme Verlag, Stuttgart 1963, beschrieben.

Die Polycarbonsäuren können aliphatischer, cycloaliphatischer, aromatischer oder heterocyclischer Natur sein. Als Beispiele für solche Carbonsäuren und deren Derivate seien genannt: Oxalsäure, Malonsäure, Bernsteinsäure, Glutarsäure, Adipinsäure, Pimelinsäure, Korksäure, Azelainsäure, Sebacinsäure, Maleinsäure, Fumarsäure, Phthalsäure, Isophthalsäure, Terephthalsäure, Diethylbernsteinsäure und 1,4-Cyclohexandicarbonsäure. Als Alkoholkomponenten können beispielsweise Ethylenglykol, Diethylenglykol, Triethylenglykol, 1,2- und 1,3-Propandiol, 1,4-, 1,3-, 1,2- und 2,3-Butandiol, 2,2,4-Trimethylpentandiol, 1,5-Pentandiol, 1,6-Hexandiol, 1,8-Octandiol, Neopentylglykol, 1,4-Bis-(hydroxymethyl)-cyclohexan, 2-Methyl-1,3-propandiol und alkoxylierte Bisphenole oder deren Hydrierungsprodukte der allgemeinen Formel

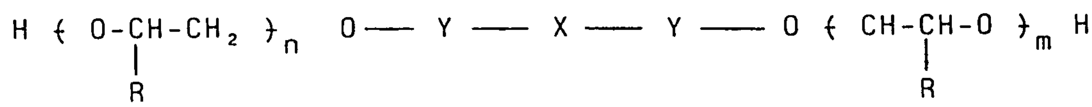

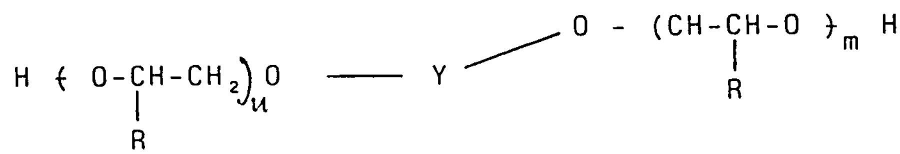

wobei

X = $R_1$-C-$R_2$; $SO_2$; N-$R_3$ ; cycloaliphatischer Ring mit C5-C6

Y: 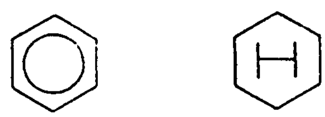

n und m = 2 - 6

R = H, $CH_3$

$R_1$ gleich oder ungleich $R_2$, oder $R_3$, Wasserstoff oder Alkylreste mit 1 bis 6 C-Atomen, symbolisiert verwendet werden.

In untergeordnetem Maße (bis etwa 5 Mol-%) lassen sich auch höherfunktionelle Polyole wie beispielsweise Glycerin, Trimethylpropan, 1,2,6-Hexantriol oder 1,2,4-Butantriol verwenden. Es sind auch Polyester mit anteiligen Doppel- oder Dreifachbindungen aus ungesättigten Fettsäuren einsetzbar, ebenso Polyester oder Mischpolyester aus Lactonen wie zum Beispiel $\epsilon$ -Caprolacton oder aus Hydroxycarbonsäuren wie zum Beispiel $\omega$ -Hydroxycapronsäure.

Die für die beschriebenen Polyurethan-Polyharustoffe verwendbaren Polyesteramide entstehen bei anteiligem Ersatz des zweiwertigen Alkohols der Polyester durch Aminoalkohole, Diamine oder Polyamine. Bevorzugt werden dabei Ethanolamin, Ethylendiamin oder Hexamethylendiamin.

Als höhermolekulare Polyhydroxyverbindungen können aber auch lineare oder schwach verzweigte, vorzugsweise zwei Hydroxylgruppen aufweisende Polyether dienen, zum Beispiel Tetrahydrofuranpolymerisate oder Additionsprodukte aus Alkylenoxiden an Starterverbindungen. Als Alkylenoxide eignen sich beispielsweise Ethylenoxid, Propylenoxid, Butylenoxid, Styroloxid und Epihalogenhydrine. Als Starterkomponenten werden Verbindungen mit beweglichen H-Atomen eingesetzt, wie Wasser, Alkohole, Amine, zum Beispiel Ethylenglykol, 1,2- und 1,3-Propylenglykol, 2,2-Bis-(4-hydroxyphenyl)-propan, Anilin oder Stearylamin.

Als Polyhydroxylverbindungen sind ebenfalls Polyacetale einsetzbar, die zum Beispiel durch Kondensation von Formaldehyd oder eines anderen Aldehyds mit mehrwertigen Alkoholen der beschriebenen Art entstehen.

Besonders bevorzugt sind Polycarbonate der an sich bekannten Art, die zum Beispiel aus den zuvor genannten Diolkomponenten, insbesondere aus Hexandiol-1,6-Basis, mit zum Beispiel Diphenylcarbonat oder Phosgen hergestellt werden können.

Als niedermolekulare Kettenverlängerungsmittel mit beweglichen Wasserstoffatomen (Zerewitinoff-aktiven H-Atomen) werden solche Verbindungen verwendet, die in etwa bifunktionell mit Isocyanaten reagieren und Molekulargewichte von 18 sowie 32 bis 399, vorzugsweise 60 bis 254, aufweisen. Insbesondere sind für diesen Zweck niedermolekulare Diole aber auch Aminoalkohole oder Diamine oder Mischungen der Kettenverlängerungsmittel beziehungsweise eine stufenweise Reaktion mit unterschiedlichen Kettenverlängerungsmitteln, geeignet.

Geeignete Kettenverlängerungsmittel sind Diole oder deren Gemische wie zum Beispiel Ethylenglykol, 1,2- und 1,3-Propandiol, 1,4-, 1,3-, 1,2- und 2,3-Butandiol, 1,5-Pentandiol, 2,2,4-Trimethylpentandiol-1,3, 1,6-Hexandiol, Neopentylglykol, 1,4-Bis(hydroxymethyl)-cyclohexan, 2-Methyl-1,3-propandiol, Di-, Tri- oder Tetraethylenglykol, alkoxylierte Bisphenole oder deren Hydrierungsprodukte, wie sie vorstehend bereits als Diolkomponenten zur Herstellung von Polyestern beschrieben wurden oder Esterdiole, zum Beispiel Hydroxypivalinsäure/Neopentylglykolester. In anteiligen Mengen, vorzugsweise bis 5 Mol.-%, können auch höherfunktionelle Polyole mitverwendet werden, zum Beispiel Trimethylolpropan. Ferner sind Aminoalkohole wie Ethanolamin, N-Methylethanolamin, N-Methyldiethanolamin oder 3-Aminopropanol einsetzbar.

Ebenso eignen sich aliphatische oder cycloaliphatische Diamine wie Ethylendiamin, Tetramethylendiamin, 1,6-Hexamethylendiamin, 1,12-Dodecamethylendiamin, 1-Amino-3-aminomethyl-3,5,5,-trimethylcyclohexan, 2,4- und 2,6-Hexahydrotoluylendiamin, 2,4'- und 4,4'-Diaminodicyclohexylmethan, 1-Amino-2-aminomethyl-3,3,5(3,5,5)-trimethylcyclopentan, Toluylendiamin, P-Xylylendiamin, 4,4'-Diaminodiphenylmethan, Hydrazin, Methylhydrazin, N,N'-Dimethylhydrazin und deren Homologe, wobei das Molekulargewicht unter 2000 beträgt.

Für besondere Einsatzzwecke können die Bindemittel auch ionische Gruppen wie Carboxyl-, Sulfonat- oder Ammoniumgruppen enthalten. Die Einführung gelingt durch Einbau von zum Beispiel Dimethylolpropionsäure, gefolgt von gegebenenfalls anschließender teilweiser oder vollständiger Versalzung, oder Mitverwendung von Sulfophthalsäure bei der Herstellung der Polyester oder Mitverwendung von beispielsweise

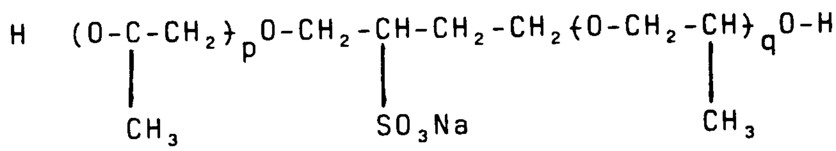

p + q = 0 - 10

im Kettenverlängerer, beziehungsweise tertiäre Amingruppenhaltigen Polyolen oder Kettenverlängerern mit nachfolgender vollständiger oder teilweiser Versalzung.

Zur Herstellung der Oligo- und/oder Polyurethane werden die üblichen Herstellverfahren verwendet. Besonders bevorzugt ist ein Verfahren, bei dem die höhermolekularen Polyole und/oder niedermolekularen Kettenverlängerungsmittel mit den Polyisocyanaten, vorzugsweise in Lösung bei Temperaturen von 30 - 130 °C, besonders bevorzugt bei 40 - 80 °C, zu NCO-endständigen Oligo- beziehungsweise Polymeren mit einem auf den Feststoff bezogenen NCO-Gehalt von 0,5 bis 10 % umgesetzt wird. Diese Polymerlösung wird eventuell mit geringen Mengen eines Diamins, beispielsweise Isophorondiamin, 4,4'-Diamino-3,3'-dimethyl-dicyclohexylmethan oder N-($\beta$-hydroxyethyl)-ethylendiamin stufenweise versetzt, bis die gewünschte Lösungsviskosität beziehungsweise das gewünschte Molekulargewicht erreicht ist. Eventuell noch vorhandene NCO-Gruppen werden mit beispielsweise Alkoholen, Dibutylamin oder vorzugsweise Oximen wie Butanonoxim abreagiert.

Erfindungswesentlich ist, wie hier nochmals betont wird, der Einsatz oxadiazintrionhaltiger Diisocyanate, wie beispielsweise der Verbindung

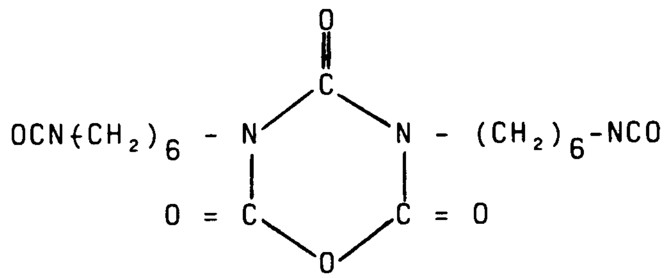

und weiterhin, daß 1 bis 100 Mol.%, vorzugsweise 5 - 100 Mol.%, der verwendeten Polyisocyanate einen 1,3,5-Oxadiazin-2,4,6-trionring enthalten.

Die so hergestellten Lösungen der Oligo- und/oder Polyurethane- und/oder Polyharnstoffe können wie übliche Polyurethane als polymere Bindemittel zur Herstellung eines magnetischen Aufzeichnungsträgers eingesetzt werden und ergeben abhängig von den verwendeten sonstigen Zusätzen und magnetischen Pigmenten nach der Kalandrierung hochabriebfeste Produkte. Die Auswahl dieser Zusätze sowie der magnetischen Pigmente ist jedem Fachmann auf dem betreffenden Gebiet geläufig.

In einem besonders bevorzugten Verfahren werden der magnetischen Dispersion polyfunktionelle Hydroxylverbindungen, wie Glykole, Triole, Hydroxylpolyole, Hydroxylpolyurethane, oder Hydroxylgruppen tragende Polymere zugesetzt und durch Zugabe von geeigneten Katalysatoren die Vernetzung bewirkt.

Geeignete Hydroxylkomponenten sind beispielsweise die bereits vorstehend genannten in der Polyurethanchemie bekannten Aufbaukomponenten. Darüber hinaus können auch die aus diesen Komponenten aufbaubaren Hydroxylpolyurethane eingesetzt werden, die dadurch erhalten werden, daß man das Verhältnis von Isocyanatgruppen zu verfügbaren Hydroxyl- und/oder Amingruppen kleiner als 1 wählt, wobei der Bereich von 0,5 : 1,0 bis 0,99 : 1,0 bevorzugt ist. Beispielhaft seien die folgenden Herstellungsverfahren genannt:

1. Polyester- und/oder Polyetherpolyole werden mit niedermolekularen Diolen und/oder Diaminen und gegebenenfalls Triolen, vorzugsweise Glycerin, in Lösung oder in der Schmelze mit vorzugsweise Diisocyanaten in einer solchen Menge umgesetzt, daß das Verhältnis der NCO-Gruppen zu Hydroxylgruppen zwischen 0,5 : 1 und 0,99 : 1, vorzugsweise 0,75 : 1 und 0,99 : 1, liegt.
2. Polyester- und/oder Polyetherpolyole werden mit niedermolekularen Diolen und/oder Diaminen und vorzugsweise Diisocyanaten in einem solchen Verhältnis von NCO-Gruppen zu Hydroxylgruppen umgesetzt, daß ein NCO-Gruppen endständiges Polymer entsteht, das man anschließend vorzugsweise in Lösung mit einem solchen Überschuß von beispielsweise Diaminen, Aminoalkoholen, Diolen und Triolen umsetzt, daß Amino- beziehungsweise Hydroxylgruppenhaltige Oligo- beziehungsweise Polymere entstehen.

Bei Verwendung von bifunktionellen Verbindungen entstehen lineare Polymere mit zwei Hydroxylendgruppen, während bei Verwendung von trifunktionellen Verbindungen wie beispielsweise Glycerin, Diethanolamin oder N-(2-hydroxyethyl)-ethylendiamin Polymere mit mehr als zwei Hydroxylgruppen entstehen.

Bevorzugt sind auch Hydroxylgruppen-tragende Polymere, wie sie beispielsweise durch Copolymerisation von Vinylchlorid und Vinylacetat und anschließende vollständige oder partielle Verseifung der Acetylgruppen erhalten werden, oder Hydroxylalkylacrylate und/oder Methacrylate, Alkydharze, Epoxidharze oder Cellulosederivate.

Als Katalysatoren können organische Metallverbindungen, wie beispielsweise Bleioctoat, Zinnoctoat und Dibutylzinndilaurat und insbesondere tertiäre Amine, wie beispielsweise Triethylamin, Triethylendiamin und insbesondere cyclische Amidine wie 1,8-Diazabicyclo(5,4,0)undec-7-en oder 1.5-Diazabicyclo(4.3.0)non-5-en verwendet werden. Diese Katalysatoren werden der magnetischen Dispersion zweckmäßigerweise kurz vor dem Auftragen auf den nichtmagnetischen Schichtträger zugesetzt.

In einem weiteren Ausführungsverfahren läßt man ein gasförmiges Amin wie beispielsweise Trimethyl- oder Triethylamin nach dem Beguß und der Trocknung der magnetisierbaren Schicht vor, während oder nach dem Glättkalander bei gegebenenfalls erhöhter Temperatur einwirken.

In einer weiteren, besonders bevorzugten Ausführungsform, wenn das Oxadiazintrionring tragende Oligo-, bevorzugt Polyurethan das alleinige Bindemittel ist, gibt man der magnetischen Dispersion kurz vor dem Auftragen auf den Schichtträger ein aliphatisches, besonders bevorzugt cycloaliphatisches Polyamin, besonders bevorzugt Diamin, in einer solchen Menge zu, daß das Verhältnis der in der magnetischen Dispersion vorhandenen Oxadiazintrionringe zu zugesetzten Amingruppen zwischen 5 : 1 und 1 : 4, besonders bevorzugt 3 : 1 bis 1 : 2, liegt.

Besonders bevorzugt sind die gut zugänglichen cycloaliphatischen Diamine, wie beispielsweise 4,4'-Diamino-3,3'-dimethyldicyclohexylmethan, 5-Amino-1-aminomethyl-1,3,3-trimethylcyclohexylmethan oder 4,4'-Diaminodicyclohexylmethan oder Polyamine, wie sie durch Reaktion von Ammoniak mit Hydroxylpolyethern unter Druck erhalten werden. Das Molekulargewicht der Polyamine sollte 2000 nicht wesentlich übersteigen.

Der Gehalt an Oxadiazintrionringen in den verwendeten Oligo- und/oder Polyurethanen kann in weiten Grenzen variiert werden.Um jedoch die Vernetzungsdichte nicht zu hoch werden zu lassen, muß der Gehalt an Oxadiazintrionringen im verwendeten Oligo- und/oder Polyurethan auf das System abgestimmt werden.

Generell sollte der molare Anteil der Oxadiazintrionringe tragenden Polyisocyanate an der Gesamtmenge der Polyisocyanate mindestens 40 Mol.-% betragen, wenn die Oxadiazintrionring enthaltenden polymeren Bindemittel ein mittleres Molekulargewicht von unter 10 000 aufweisen, während für Molekulargewichte von über 20 000 der molare Anteil der Oxadiazintrionring tragenden Polyisocyanate auf 5 bis 25 Mol.-% des gesamt verwendeten Polyisocyanats beschränkt werden kann.

A) Herstellungsbeispiel eines polymeren Bindemittels für den erfindungsgemäßen magnetischen Aufzeichnungsträger

166 g (0,0807 Mol) eines Hexandiolpolycarbonats der OH-Zahl 54,5 werden in 980 g Tetrahydrofuran gelöst. Nach Zugabe von 29,06 g (0,323 Mol) Butandiol-1,4, 20,02 g (0,323 Mol) Ethylenglykol werden 25,78 g (0,061 Mol) 3,5-Diisocyanatohexyl-oxadiazin-2,4,6-trion und 0,53 g einer 1%igen Dibutylzinndilauratlösung in Tetrahydrofuran zugegeben. Nach 4stündigem Rühren bei 50 - 60 °C werden 179 g (0,716 Mol) 4,4'-Diisocyanatodiphenylmethan eingetropft und die Reaktion für 6 Stunden bei 50 - 60 °C fortgeführt. Man erhält einen konstanten NCO-Wert von 0,04 %. Die 30%ige Lösung wird mit einer Lösung von Isophorondiamin in Tetrahydrofuran stufenweise verlängert, bis die auf 20 % Feststoff verdünnte Lösung eine Viskosität von 1700 mPas bei 25 °C hat. Durch Zugabe von 0,18 g Butanonoxim werden die restlichen NCO-Gruppen abreagiert.

B) Herstellungsbeispiel eines Vernetzers für den erfindungsgemäßen magnetischen Aufzeichnungsträger

83,2 g (0,8 Mol) Neopentylglykol, 420,6 g (1,0 Mol) 3,5-Di(isocyanatohexyl)-oxadiazin-2,4,6-trion werden in 503,8 g Tetrahydrofuran nach Zugabe von 0,6 ml einer 1%igen Dibutylzinndilauratlösung in Tetrahydrofuran 18 Stunden bei 50 - 60 °C gerührt. Man erhält einen konstanten NCO-Wert von 1,83 %. Durch Zugabe von 38,2 g (0,44 Mol) Butanonoxim wird der Rest-NCO-Gehalt abreagiert. Die 50%ige Lösung hat eine Viskosität von 1600 mPas bei 25 °C. Aus dem NCO-Wert von 1,83 % errechnet sich ein mittleres Molekulargewicht von ca. 2 300.

Beispiel 1

Eine magnetische Dispersion mit folgenden Bestandteilen wurde zubereitet

| | Gewichtsteile |
|---|---|
| Ferromagnetisches Metallpulver | 100 |
| Polymeres Bindemittel nach Herstellungsbeispiel A (Feststoffgehalt) | 18,5 |
| n-Stearinsäure | 0,5 |
| Lecithin | 3,0 |
| Ruß (mittlerer Durchmesser 0,1 µm) | 1,0 |
| $\alpha$-$Al_2O_3$ (mittlerer Durchmesser 0,3 µm) | 2,5 |
| Isocetylstearat | 4,0 |
| Tetrahydrofuran | 130,0 |
| Methylethylketon | 100,0 |

Die angegebene Zubereitung wurde 10 Stunden lang in einer Kugelmühle gemahlen, anschließend wurden 0,1 Gewichtsteile Isophorondiamin zugefügt und eine weitere Stunde gemahlen. Nach Feinfiltration wurde die Dispersion mit Hilfe eines Extrudergießers auf eine 10 µm dicke Polyethylenterephthalatfolie mit

einer Trockendicke von 3,5 µm aufgebracht. Die magnetische Dispersion wurde im flüssigen Zustand durch ein Magnetfeld in Gießrichtung ausgerichtet, nach der Trocknung wurde der Aufzeichnungsträger kalandriert und anschließend in 8 mm breite Streifen getrennt.

Beispiel 2

Dabei wurde wie in Beispiel 1 verfahren, jedoch wurden der Dispersion 0,1 Gewichtsteile 3,3'-Dimethyl, 4,4'-Diaminodicyclohexylmethan anstelle von Isophorondiamin zugesetzt.

Vergleichsbeispiel 3

Eine magnetische Dispersion mit folgenden Bestandteilen wurde zubereitet:

| | Gewichtsteile |
|---|---|
| Ferromagnetisches Metallpulver | 100 |
| Vinylchlorid-Vinylacetal-Copolymer | 8,5 |
| Polyester-Polyurethan (Estane 5707 der B. F. Goodrich) | 10,0 |
| n-Stearinsäure | 0,5 |
| Lecithin | 3,0 |
| Ruß (mittlerer Durchmesser 0,1 µm) | 1,0 |
| $\alpha$-$Al_2O_3$ (mittlerer Durchmesser 0,3 µm) | 2,5 |
| Isocetylstearat | 4,0 |
| Tetrahydrofuran | 130,0 |
| Methylethylketon | 100,0 |

Die angegebene Zubereitung wurde in einer Kugelmühle 10 Stunden lang gemahlen, anschließend wurden acht Gewichtsteile eines mehrfunktionellen Isocyanats (Desmodur L® der Bayer AG) zugesetzt und eine weitere Stunde gemahlen. Die weitere Behandlung entsprach dem Beispiel 1.

Beispiel 4

Dabei wurde wie in Vergleichsbeispiel 3 verfahren, jedoch wurde 1 Gewichtsteil der Verbindung nach dem Herstellungsbeispiel B anstelle der 8 Gewichtsteile Desmodur L zugesetzt. Zusätzlich wurden 0,2 Gewichtsteile 1,8-Diazabicyclo[5,4,0] undec-7-en zugesetzt. Die weitere Behandlung entsprach dem Beispiel 1.

Ergebnisse der Anwendungsbeispiele

Zur Bestimmung der elektroakustischen Eigenschaften wurde die Koerzitivkraft IHC und als Maß für die Ausrichtung der magnetischen Pigmente wurde das Verhältnis der remanenten Magnetisierung zur Sättigungsmagnetisierung $M_R/M_S$ in Längsrichtung bestimmt. Dabei hatten die magnetischen Aufzeichnungsträger der Beispiele 1 bis 4 vergleichbare Eigenschaften.

Des weiteren wurde die Standbildfestigkeit bestimmt. Dazu wurden die 8 mm-Streifen in eine dem Stand der Technik entsprechende 8 mm-Cassette konfektioniert, ein Signal von 5 MHz wurde auf einem entsprechend umgerüsteten Video-Recorder der Firma Sony (Typ EVA 300) aufgespielt und die Zeit wurde bestimmt, bei der bei Standbildabspielung ein Pegelabfall größer als 3 dB entritt.

Der Abrieb wurde bestimmt, indem die entsprechenden Cassetten 54 mal in dem oben genannten Video-Recorder in schnellem Vor- und Rücklauf reversiert wurden. Der an der Kopftrommel aufgetretene Abrieb der magnetisierbaren Schicht wurde qualitativ bestimmt (1 = kein Abrieb, 6 = starker Abrieb).

Ein Maß für die Vernetzungsstabilität stellt die Extrahierbarkeit dar. Dabei wird eine Probe des magnetischen Aufzeichnungsträgers 24 Stunden in Tetrahydrofuran bei 20 °C extrahiert, worauf der prozentuale Gewichtsverlust der magnetisierbaren Schicht bestimmt wird.

Die folgende Tabelle zeigt die erhaltenen Ergebnisse.

Tabelle

| Probe gemäß | Standbild-festigkeit | Abrieb | Extrahierbarkeit (% Gewichtsverlust) |
|---|---|---|---|
| Beispiel 1 | > 60 Min. | 1 | 0 |
| Beispiel 2 | > 60 Min. | 1 | 5 |
| Vergleichsbeispiel 3 | 20 Min. | 4 | 20 |
| Beispiel 4 | > 60 Min. | 2 | 3 |

Aus den Ergebnissen ist ersichtlich, daß bei gleichen elektroakustischen Eigenschaften die magnetischen Aufzeichnungsträger, welche die erfindungsgemäße Vernetzungsreaktion durchlaufen haben, deutlich bessere mechanische Eigenschaften, verglichen mit Aufzeichnungsträgern, die gemäß dem Stand der Technik vernetzt worden waren, aufweisen.

**Patentansprüche**

1. Magnetisches Speichermedium, bestehend aus einem unmagnetischen Schichtträger und mindestens einer darauf befindlichen magnet-isierbaren Schicht, enthaltend feinteilige magnetische Pigmente und als polymere Bindemittel durch Polyisocyanate vernetzte Oligo- und/oder Polyurethane und/oder Polyharnstoffe, dadurch gekennzeichnet, daß der Aufbau der Bindemittel durch im wesentlichen difunktionelle Polyisocyanate bewirkt wird, von denen 1 bis 100 Mol.% einen 1,3,5-Oxadiazin-2,4,6-trionring enthalten, wobei die Vernetzungsreaktion in Gegenwart von Hydroxyl- und/oder aliphatischen Aminogruppen geschieht.

2. Magnetischer Aufzeichnungsträger nach Anspruch 1, dadurch gekennzeichnet, daß die Oxadiazintrionring enthaltenden Oligo- und/oder Polyurethane und/oder Polyharnstoffe Umsetzungsprodukte sind von
   A Polyisocyanaten der Funktionalität 1,95 - 2,05, besonders bevorzugt 1,99 - 2,01
   B Verbindungen mit vorwiegend zwei zerewitinoffaktiven Wasserstoffen aus der Gruppe der Hydroxyl- und/oder Aminoverbindungen des Molekulargewichts 18 bis 6000,

   mit der Maßgabe, daß das Verhältnis der in A vorhandenen NCO-Gruppen zu den in B vorhandenen zerewitinoffaktiven Wasserstoffen zwischen 0,75 : 1 bis 1,1 : 1 beträgt und die unter A genannten Polyisocyanate zu 5 bis 100 Mol.% aus Oxadiazintrionring enthaltenden Polyisocyanaten bestehen.

3. Magnetischer Aufzeichnungsträger nach den Ansprüchen 1 - 2, dadurch gekennzeichnet, daß das zu vernetzende Bindemittel praktisch frei von NCO-Gruppen ist.

4. Magnetischer Aufzeichnungsträger nach Anspruch 1 bis 3, dadurch gekennzeichnet, daß die zum Aufbau der polymeren, vernetzten Matrix verwendeten Komponenten zu 0 - 99 Gew.% aus oxadiazintrionfreien hydroxyl- und/oder aminogruppenhaltigen Polymeren und zu 100 - 1 Gew.% aus Oxadiazintrionring enthaltenden Oligo- und/oder Polyurethanen besteht.

5. Magnetischer Aufzeichnungsträger nach Anspruch 1 bis 4, dadurch gekennzeichnet, daß die zum Aufbau der oxadiazintrionringhaltigen Oligo- und/oder Polyurethane verwendeten Polyisocyanate zu 25 bis 100 Mol.% aus Oxadiazintrionring enthaltenden Polyisocyanaten bestehen und einen Gesamtanteil von 1 bis 60 Gew.% an der Gesamtpolymermatrix haben.

6. Magnetischer Aufzeichnungsträger nach Anspruch 1 bis 4, dadurch gekennzeichnet, daß die zum Aufbau der Oxadiazintrionring enthaltenden Oligo- und/oder Polyurethane verwendeten Polyisocyanate zu 5 - 25 Mol.% aus Oxadiazintrionring enthaltenden Polyisocyanaten bestehen und diese Oligo-

und/oder Polyurethane zu 30 - 100 Gew.% zum Aufbau der polymeren, vernetzten Matrix beitragen.

**7.** Magnetischer Aufzeichnungsträger nach Anspruch 1 bis 4 und 6, dadurch gekennzeichnet, daß dem einen Oxadiazintrionring enthaltenden Oligo- und/oder Polyurethan aliphatische und/oder cycloaliphatische Polyamine mit einem Molekulargewicht von unter 2000 zugesetzt werden und daß das Verhältnis von Aminogruppen zu Oxadiazintrionringen zwischen 5 : 1 und 1 : 4, vorzugsweise 3 : 1 und 1 : 2, liegt.

**8.** Magnetischer Aufzeichnungsträger nach Anspruch 1 bis 6, dadurch gekennzeichnet, daß zur Härtung der magnetisierbaren Schicht katalytische Mengen an tertiären Aminen zugegeben wurden.

**9.** Magnetischer Aufzeichnungsträger nach Anspruch 1 bis 6 und 8, dadurch gekennzeichnet, daß als Katalysatoren bicyclische Amidine verwendet wurden.

**10.** Verfahren zur Herstellung eines magnetischen Aufzeichnungsträgers nach Anspruch 1 bis 6 und 8, dadurch gekennzeichnet, daß der Aufzeichnungsträger bei seiner Herstellung vor, während oder nach dem Kalandriervorgang einer tertiäres Amin enthaltenden Atmosphäre ausgesetzt wird.

**11.** Magnetischer Aufzeichnungsträger nach Anspruch 1 bis 10, dadurch gekennzeichnet, daß die feinteiligen magnetischen Pigmente Pulver auf der Basis von Metallen oder metallischen Legierungen sind.

## Claims

**1.** A magnetic storage medium consisting of a non-magnetic substrate and at least one magnetizable layer present thereon and containing finely divided magnetic pigments and, as polymeric binders, polyisocyanate-crosslinked oligo- and/or polyurethanes and/or polyureas, wherein the binder consists essentially of bifunctional polyisocyanates, from 1 to 100 mol % of which contain a 1,3,5-oxadiazine-2,4,6-trione ring, the crosslinking reaction taking place in the presence of hydroxyl and/or aliphatic amino groups.

**2.** A magnetic recording medium as claimed in claim 1, wherein the polyisocyanate-crosslinked oligo- and/or polyurethanes and/or polyureas containing an oxadiazinetrione ring are reaction products of

A polyisocyanates having a functionality of 1.95-2.05, particularly preferably 1.99-2.01, and

B compounds having predominantly two zerewitinoff-active hydrogens, selected from the group consisting of the hydroxy and/or amino compounds having a molecular weight of from 18 to 6,000,

with the proviso that the ratio of the NCO groups present in A to the zerewitinoff-active hydrogens present in B is from 0.75 : 1 to 1.1 : 1 and the polyisocyanates stated under A consist of from 5 to 100 mol % of polyisocyanates containing an oxadiazinetrione ring.

**3.** A magnetic recording medium as claimed in claims 1 and 2, wherein the binder to be crosslinked is virtually free of NCO groups.

**4.** A magnetic recording medium as claimed in any of claims 1 to 3, wherein the components used for synthesizing the polymeric, crosslinked matrix consist of 0-99% by weight of oxadiazinetrione-free hydroxyl- and/or amino-containing polymers and 100-1% by weight of oligo- and/or polyurethanes containing an oxadiazinetrione ring.

**5.** A magnetic recording medium as claimed in any of claims 1 to 4, wherein the polyisocyanate used for synthesizing the oligo- and/or polyurethanes containing an oxadiazinetrione ring consist of from 25 to 100 mol % of polyisocyanates containing an oxadiazinetrione ring and are present in a total amount of from 1 to 60% by weight, based on the total polymer matrix.

**6.** A magnetic recording medium as claimed in any of claims 1 to 4, wherein the polyisocyanates used for synthesizing the oligo- and/or polyurethanes containing an oxadiazinetrione ring consist of 5-25 mol % of polyisocyanates containing an oxadiazinetrione ring and these oligo- and/or polyurethanes account for 30-100% by weight of the polymeric, crosslinked matrix.

**7.** A magnetic recording medium as claimed in any of claims 1 to 4 and 6, wherein aliphatic and/or cycloaliphatic polyamines having a molecular weight of less than 2,000 are added to the oligo- and/or

polyurethane containing an oxadiazinetrione ring, and wherein the ratio of amino groups to oxadiazinetrione rings is from 5 : 1 to 1 : 4, preferably from 3 : 1 to 1 : 2.

**8.** A magnetic recording medium as claimed in any of claims 1 to 6, wherein catalytic amounts of tertiary amines were added for curing the magnetizable layer.

**9.** A magnetic recording medium as claimed in any of claims 1 to 6 and 8, wherein bicyclic amidines were added as catalysts.

**10.** A process for the production of a magnetic recording medium as claimed in any of claims 1 to 6 and 8, wherein the recording medium is exposed to an atmosphere containing a tertiary amine during its production, before, during or after the calendering process.

**11.** A magnetic recording medium as claimed in any of claims 1 to 10, wherein the finely divided magnetic pigments are powders based on metals or metallic alloys.

**Revendications**

**1.** Milieu d'enregistrement magnétique consistant en un support de couche non magnétique et, sur celui-ci, au moins une couche magnétisable contenant des pigments magnétiques en fines particules et, en tant que liants polymères, des oligo- et/ou poly-uréthanes et/ou poly-urées réticulés par des polysocyanates, caractérisé en ce que la synthèse des liants a été réalisée au moyen de polyisocyanates essentiellement difonctionnels dont 1 à 100 mol% contiennent un cycle 1,3,5-oxadiazine-2,4,6-trione, la réaction de réticulation étant effectuée en présence de groupes hydroxy et/ou amino aliphatiques.

**2.** Support d'enregistrement magnétique selon la revendication 1, caractérisé en ce que les oligo- et/ou poly-uréthannes et/ou poly-urées contenant le cyle oxadiazine-trione sont des produits de réaction de :

A. des polyisocyanates en fonctionnalité 1,95 à 2,05 plus spécialement 1,99 à 2,01

B. des composés ayant principalement deux hydrogènes actifs selon Zerewitinoff pris dans le groupe des composés hydrocylés et/ou aminés de poids moléculaire 18 à 6000,

sous réserve que le rapport des groupes NCO présents dans A aux hydrogènes actifs selon Zerewitinoff présents dans B se situe entre 0,75:1 et 1,1:1 et que les polyisocyanates mentionnés sous A consistent pour 5 à 100 mol% en polyisocyanates contenant le cycle oxadiazine-trione.

**3.** Support d'enregistrement magnétique selon la revendication 1 ou 2, caractérisé en ce que le liant à réticuler est pratiquement exempt de groupes NCO.

**4.** Support d'enregistrement magnétique selon l'une des revendications 1 à 3, caractérisé en ce que les composants utilisées pour la synthèse de la gangue polymère réticulée consistent pour 0 à 99 % en poids en polymère contenant des groupes hydroxy et/ou amino mais exempts d'oxadiazinetrione et pour 100 à 1 % en poids en oligo- et/ou polyuréthannes contenant le cycle oxadiazine-trione.

**5.** Support d'enregistrement magnétique selon l'une des revendications 1 à 4, caractérisé en ce que les polyisocyanates utilisés pour la synthèse des oligo- et/ou poly-uréthannes contenant le cycle oxadiazine-trione consistent pour 25 à 100 mol% en poly-isocyanates contenant le cycle oxadiazine-trione et représentant au total de 1 à 60 % du poids de la gangue polymère totale.

**6.** Support d'enregistrement magnétique selon l'une des revendications 1 à 4, caractérisé en ce que les polyisocyanates utilisés pour la synthèse des oligo- et/ou poly-uréthanes contenant le cycle oxadiazine-trione consistent pour 5 à 25 mol% en polyisocyanates contenant le cycle oxadiazine-trione et en ce que ces oligo- et/ou polyuréthannes contribuent pour 30 à 100 % en poids à la synthèse de la gangue polymère réticulée.

**7.** Support d'enregistrement magnétique selon l'une des revendications 1 à 4 et 6, caractérisé en ce que l'on ajoute à un oligo- et/ou poly-uréthanne contenant le cycle oxadiazine-trione des polyamines aliphatiques et/ou cycloaliphatiques de poids moléculaire inférieur à 10 000 et en ce que le rapport entre les groupes amino et les cycles oxadiazine-trione se situe entre 5:1 et 1:4, de préférence entre 3:1 et 1:2.

**8.** Support d'enregistrement magnétique selon l'une des revendications 1 à 6, caractérisé en ce que, pour le durcissement de la couche magnétisable, on ajoute des quantités catalytiques d'amines tertiaires.

**9.** Support d'enregistrement magnétique selon l'une des revendications 1 à 6, caractérisé en ce que l'on utilise en tant que catalyseurs des amidines bicycliques.

**10.** Procédé de préparation d'un support d'enregistrement magnétique selon l'une des revendications 1 à 6 et 8, caractérisé en ce que l'on expose le support d'enregistrement lors de sa préparation, avant, durant ou après l'opération de calandrage, à une atmosphère contenant une amine tertiaire.

**11.** Support d'enregistrement magnétique selon l'une des revendications 1 à 10, caractérisé en ce que les pigments magnétiques en fines particules sont des poudres à base de métaux ou d'alliages métalliques.